# FASCICULE DE BREVET EUROPEEN

(11) **EP 2 911 855 B1**
(45) Date de publication et mention de la délivrance du brevet: **11.07.2018**
(21) Numéro de dépôt: 13789869.8
(22) Date de dépôt: 21.10.2013
(51) Int. Cl.: B29C 45/14, B29B 7/04, B29C 45/56, B29C 70/48, B29K 77/00

(54) **PROCÉDÉ DE FABRICATION D'UNE PIÈCE COMPOSITE THERMOPLASTIQUE, PAR INJECTION-COMPRESSION-MOULAGE SOUS VIDE, DISPOSITIF DE MISE EN OEUVRE ET PIÈCE AINSI OBTENUE**
VERFAHREN ZUR HERSTELLUNG EINES THERMOPLASTISCHEN VERBUNDTEILS DURCH VAKUUMSPRITZPRÄGEN, VORRICHTUNG ZUR IMPLEMENTIERUNG DAVON UND RESULTIERENDES TEIL
METHOD FOR MANUFACTURING A COMPOSITE THERMOPLASTIC PART BY VACUUM INJECTION-COMPRESSION-MOLDING, DEVICE FOR THE IMPLEMENTATION THEREOF AND RESULTING PART

(30) Priorité: 23.10.2012 FR 1260090
(43) Date de publication de la demande: 02.09.2015
(73) Titulaire: Arkema France, 92700 Colombes (FR); Institut de Soudure, 93420 Villepinte (FR)
(72) Inventeur: CAUCHOIS, Jean-Pierre, 67510 Obersteinbach (FR); HOCHSTETTER, Gilles, 94240 L'Hay les Roses (FR); GLOTIN, Michel, 92210 Saint-Cloud (FR)
(74) Mandataire: Killis, Andréas
(86) Numéro de dépôt international: PCT/FR2013/052509
(87) Numéro de publication internationale: WO 2014/064376

(56) Documents cités:
- EP-A1- 2 586 585
- WO-A1-2011/118226
- WO-A2-2011/151710
- DE-A1-102011 013 742
- US-A- 5 514 322
- KARLSSON K F ET AL: "Manufacturing and applications of structural sandwich components", COMPOSITES, IPC BUSINESS PRESS LTD. HAYWARDS HEATH, GB, vol. 28, no. 2, 1 janvier 1997 (1997-01-01), pages 97-111, XP004117732, ISSN: 0010-4361, DOI: 10.1016/S1359-835X(96)00098-X
- LEBRUN G ET AL: "EXPERIMENTAL INVESTIGATION OF RESIN TEMPERATURE AND PRESSURE DURINGFILLING AND CURING IN A FLAT STEEL RTM MOULD", COMPOSITES, IPC BUSINESS PRESS LTD. HAYWARDS HEATH, GB, vol. 27A, no. 5, 1 mai 1996 (1996-05-01), pages 347-356, XP000587331, ISSN: 0010-4361
- STARK E B ET AL: "RESIN TRANSFER MOULDING (RTM) OF HIGH PERFORMANCE RESINS", COMPOSITE POLYMERS, RAPRA TECHNOLOGY, SHAWBURY, SHREWSBURY, GB, vol. 3, no. 6, 1 janvier 1990 (1990-01-01) , pages 423-437, XP000226333,
- DEMOULIN J J M: "Welcome to...Resin Transfer Molding (RTM) Page", INTERNET CITATION, 9 septembre 2004 (2004-09-09), XP002295828, Extrait de l'Internet: URL:http://research.et.byu.edu/acme/rtm2.h tml [extrait le 2004-09-09]
- MOLLMAN R E: "LIQUID COMPOSITE MOLDING MOVES INTO STRUCTURES", MACHINE DESIGN, PENTON MEDIA, CLEVELAND, OH, US, vol. 62, no. 12, 7 juin 1990 (1990-06-07), pages 46-49, XP000136002, ISSN: 0024-9114

## Description

La présente invention concerne un procédé spécifique de fabrication d'une pièce composite structurale ou semi-structurale, comprenant un moulage spécifique par injection-compression dans un moule en deux parties fermé et maintenu sous vide et également un dispositif spécifique pour la mise en oeuvre dudit procédé de fabrication, la pièce structurale ou semi-structurale qui en résulte comme l'utilisation spécifique dudit procédé par exemple en association avec un procédé d'assemblage « in-mold », signifiant assemblage dans le moule.

DE 102011013742 décrit un procédé de moulage de matériaux composites renforcés par des fibres, qui comprend les étapes de dégazage d'une résine durcissable, le dégazage d'un durcisseur et le mélange de la résine et du durcisseur sous vide constant et le remplissage du moule avec exclusion d'air pour des pièces moulées exemptes de bulles.

US 5514322 décrit un procédé RIM pour la préparation d'une résine thermoplastique par polymérisation anionique, dans lequel procédé ladite polymérisation est contrôlée pour ne pas démarrer avant injection et mélange dans le moule de deux mélanges réactionnels I et II. Le principe de ce procédé est basé sur le fait que chacun des deux mélanges I et II contient séparément et respectivement des composés i) et ii) formant par leur mélange dans ledit moule, le système catalytique actif qui amorce ladite polymérisation anionique laquelle par conséquent ne peut pas démarrer avant l'injection dans le moule, permettant ainsi le contrôle de la viscosité (faible) du mélange injecté lors de l'injection.

Les procédés actuels, utilisés pour la fabrication de pièces composites moulées à partir de compositions réactives chargées de fibres de renfort longues, nécessitent généralement une opération de reprise et de finition après démoulage, ce qui augmente le temps de cycle pour la pièce finie et réduit considérablement la productivité, en plus du fait que la porosité desdites pièces reste relativement élevée affectant ainsi les performances mécaniques de ces pièces lors de leur utilisation. En particulier, dans le cas de pièces pour automobile, il est indispensable que la pièce moulée soit apte à passer sans problème le traitement dans les conditions de cataphorèse.

La présente invention propose de remédier à ces inconvénients en proposant un nouveau procédé spécifique par l'utilisation d'un nouveau dispositif permettant la mise en oeuvre de ce procédé.

Le problème à résoudre est donc la fabrication rapide d'une pièce composite finie, structurale ou semi-structurale, ne nécessitant aucune opération de reprise et/ou d'usinage pour la finition après démoulage et présentant une bonne résistance mécanique et permettant l'utilisation de prépolymères thermoplastiques réactifs présentant une viscosité à l'état fondu à la température de moulage inférieure à 50 Pa.s, de préférence inférieure à 5 Pa.s et plus préférentiellement inférieure à 1 Pa.s. Plus particulièrement, dans le cas des pièces pour automobile, la pièce doit être apte à passer en cataphorèse sans difficulté ou problème particulier.
La solution de la présente invention propose un système de dispositif d'injection-moulage qui comprend un moule en deux parties, une fixe et l'autre mobile et séparées par un joint d'étanchéité compressible formant ainsi une cavité de moulage étanche sous vide. Cela permet une injection rapide de la résine liquide et permet de s'affranchir de la présence d'un évent, ce qui permet d'éviter la formation d'une carotte nécessitant une opération d'usinage après démoulage de la pièce : il s'agit d'un procédé permettant une pièce moulée dite « net shape », sans aucun besoin de finition ou d'usinage pour son utilisation finale.

Les 2 faces du moule ont la possibilité de se déplacer l'une vers l'autre après que la résine ait été injectée dans le moule. Cela permet une compaction de l'ensemble constitué de la résine fondue + fibre et finalement d'obtenir un composite présentant un taux de porosité très faible, ce qui assurera à la pièce moulée une bonne résistance mécanique. Cette compression se fait grâce à une dépression supplémentaire, correspondant à une pression de l'ordre de 1 mbar, en particulier inférieure à 1 mbar, appliquée sur les faces du moule.

La cavité étanche de moulage non compactée (c'est-à-dire non compressée) permet un fluage de la matière aisé diminuant le temps d'injection, avantage essentiel de l'invention. Le compactage ou compression dû à la fermeture du moule (sous l'effet de la dépression créée) assure à la fois le remplissage complet de ladite cavité de moulage mais également le fluage transverse de la matière par rapport au renfort, tout cela dans une cavité à une pression de l'ordre du mbar, en particulier inférieure à 1 mbar. Ledit moule a une fermeture étanche sous vide et ne comporte aucun évent et est alimenté directement par un dispositif d'injection à travers une alimentation au niveau de la sortie de la tête d'un mélangeur statique comme décrit pour le système d'injection ci-dessous.

La présence du vide, l'absence d'insert et la possibilité d'une compaction finale de l'ensemble résine + fibre permettent d'injecter uniquement la quantité de résine nécessaire et suffisante pour faire la pièce, ce qui est une source d'économie pour le procédé et qui est un avantage supplémentaire pour le procédé selon la présente invention.

La possibilité de compaction permet en outre d'utiliser des résines thermoplastiques qui sont plus visqueuses à l'état fondu que les résines thermodurcissables traditionnellement utilisées dans les procédés dit « LCM » (liquid composite molding) telle que la RTM (typiquement 1 à 50 Pa.s contre inférieur à 1 Pa.s pour la RTM thermodurcissable). En plus, la pression de fermeture dudit moule (par dépression) permet d'utiliser des moules en matériau plus légers et plus pratiques et moins chers à fabriquer.

Le système d'injection de la résine permet l'utilisation d'un système réactif bicomposant et est constitué de 2 réseaux indépendants dans lesquels circulent les 2 composés indépendamment l'un de l'autre et donc sans limitation de temps (pas de « pot life »). Le système possède également une chambre de mélange statique (par exemple chambre de la tête d'un mélangeur statique) piloté par un système mécanique permettant le mélange rapide des 2 constituants avec un temps de mélange inférieur à 2 minutes, de préférence inférieur à 1 minute, plus particulièrement inférieur à 10 secondes, juste avant l'injection dans le moule. Il est évident que le temps de séjour dans la tête du mélangeur statique (durée de mélange bicomposant), avant l'injection dans ledit moule, est adapté en fonction de la réactivité dudit système bicomposant de manière à éviter une polymérisation et figeage dans ledit mélangeur avant injection dans le système de moulage spécifique.

Ce système permet l'utilisation de prépolymère thermoplastique réactif, en particulier polyamide semi-aromatique ou semi-cycloaliphatique et d'un allongeur de chaîne, ce qui est un moyen pour obtenir une pièce présentant de bonnes propriétés mécaniques car le polymère final formé après réaction du prépolymère et de l'allongeur de chaîne présentera une haute Tg. Dans une version préférée, le polymère est semi-cristallin et présente une température de cristallisation supérieure à 200°C, de préférence supérieure à 220°C, ce qui permet à la pièce moulée de passer dans un procédé de cataphorèse.

En outre, l'utilisation de polyamide de haute Tg (PA HT) et d'un procédé d'injection fonctionnant à haute température, typiquement de 180°C à 400°C, de préférence de 200°C à 300°C, permet d'utiliser des systèmes réactifs rapides, typiquement avec une polymérisation en moins de 5 minutes, de préférence en moins de 2 minutes, encore plus préférentiellement en moins de 1 minute et finalement réduire les temps de cycle de moulage.

Le système permet d'utiliser une préforme constituant le réseau de fibre de renfort longue avec un facteur de forme, longueur sur diamètre L/D, supérieur à 1000 et de préférence supérieur à 2000.

Un surmoulage de la préforme préalablement imprégnée de résine par un polymère fondu est possible, de façon à pouvoir fabriquer des pièces de forme complexe présentant par exemple des inserts ou des pattes de fixation. Le polymère utilisé en surmoulage (sous forme de granulés) sera de préférence chargé de fibres de renfort courtes ou longues (L/D inférieur à 1000), par exemple de verre ou de carbone et il est de même nature chimique que (ou compatible avec) la résine (ou composition réactive bicomposante) utilisée pour l'imprégnation du réseau de fibres continues. En particulier, ledit polymère de surmoulage est chimiquement et physiquement compatible de façon à assurer une bonne adhésion entre la partie surmoulée et la partie composite à fibre continue et, dans le cas où une résine semi-cristalline serait utilisée pour la fabrication de la partie composite à fibres longues continues, assurer le passage en cataphorèse de l'ensemble composite + parties surmoulées.

La présente invention par son originalité présente, par rapport à l'état actuel de la technique, les avantages associés comme exposés ci-dessous :
- Procédé de moulage par voie fondue, donc adapté aux thermoplastiques, rapide car il permet d'utiliser des prépolymères, ce qui limite la durée de l'étape de polymérisation et ne pose pas le problème du taux de monomère résiduel posé par les procédés partant de monomères ce qui évite les post-cuissons ou les temps de polymérisation excessifs, ce qui permet également un démoulage avant la fin de la polymérisation, en particulier pour les prépolymères semi-cristallins, de préférence polyamides, présentant un point de fusion élevé. Procédé rapide également parce que son système d'injection fonctionne à haute température et autorise l'utilisation de prépolymère de type PA HT : ce type de prépolymère présente une cinétique de polymérisation rapide car il polymérise à haute température et en outre le polymère ainsi obtenu présente une haute Tg, ce qui permet d'obtenir de bonnes propriétés mécaniques pour le composite et, de préférence, il est semi-cristallin et présente une température de cristallisation supérieure à 200°C et de ce fait permet le passage en cataphorèse de la pièce composite moulée. Ce type de procédé n'existe pas à ce jour.
- Procédé de moulage et surmoulage thermoplastique permettant d'obtenir une pièce finie ne nécessitant pas de retouchage après démoulage, présentant simultanément une forme complexe et une bonne résistance mécanique et permettant d'utiliser uniquement la quantité de résine nécessaire (pré-dosée) et suffisante à l'imprégnation des fibres. Ce type de procédé n'existe pas à ce jour.

Plus particulièrement, la solution de l'invention présente un intérêt plus particulier pour des pièces dans le domaine de l'automobile, plus particulièrement des pièces complexes, lesquelles résistent dans les conditions de passage en cataphorèse et peut concerner plus particulièrement des pièces complexes telles qu'une « caisse en blanc » (« body in white » en terme équivalent en anglais) d'une voiture, selon les termes courants utilisés dans le métier de l'automobile. C'est sur cette pièce que seront fixés les portes, moteur, carrosserie et laquelle pièce associe composites et métaux. C'est bien l'ensemble associant composites et métaux qui subit ainsi le traitement en cataphorèse.

Les utilisations finales des pièces selon l'invention, obtenues en utilisant le procédé de l'invention et/ou le dispositif décrit selon la présente invention, concernent plus généralement des applications dans les domaines de l'automobile, du transport routier (camions), ferroviaire, maritime, aéronautique, de l'éolien, solaire (thermique) y compris dans centrales solaires, spatial, photovoltaïque, bâtiment et génie civil, mobilier et équipements urbains, signalisation, des sports et loisirs.

Un premier objet de l'invention concerne donc un procédé spécifique de mise en oeuvre ou de fabrication de ladite pièce composite structurale ou semi-structurale comprenant les étapes de dépôt du renfort fibreux dans un moule spécifique sous vide et ne disposant d'aucun évent, ensuite de remplissage sous vide dudit moule par injection sur ledit renfort d'une composition réactive bicomposante à l'état fondu, à base de prépolymère thermoplastique, par injection et en utilisant un dispositif particulier d'injection à deux compartiments pour chacun des deux composants, avec mélange desdits composants dans un mélangeur statique, remplissage suivi d'une mise sous dépression supplémentaire permettant le compactage de la matière injectée par la pression exercée sur les deux parties dudit moule et par la compression d'un joint d'étanchéité séparant les deux parties dudit moule et finalement un démoulage de ladite pièce sans aucun besoin de finition ou d'usinage supplémentaire.

Le deuxième objet de l'invention concerne un dispositif spécifique comprenant un dispositif particulier d'injection et un dispositif particulier de moulage associés dans ce même dispositif de l'invention et permettant la mise en oeuvre dudit procédé premier objet de l'invention.

L'invention couvre également une pièce composite structurale ou semi-structurale et susceptible d'être obtenue par le procédé de l'invention, en particulier ne présentant aucun traitement de finition après démoulage. En effet, cette pièce au démoulage ne présente aucune carotte liée à un évent nécessitant son usinage et finition supplémentaire par le fait que le procédé utilise un moule sans aucun évent car le système marche sous vide.

Donc, le premier objet de l'invention, de manière plus détaillée, concerne un procédé de fabrication d'une pièce composite structurale ou semi-structurale pouvant être de forme complexe comprenant un renfort fibreux et une matrice polymère thermoplastique, de préférence à base de polyamide, caractérisé en ce qu'il comprend les étapes suivantes :
i) dépôt dudit renfort fibreux pouvant être à l'état de préforme dans un moule comportant deux parties, une partie fixe et une mobile, avec fermeture étanche dudit moule à l'aide d'un joint d'étanchéité compressible par mise sous vide dudit moule à l'aide d'un dispositif de vide, la pression partielle dans le moule allant de 1 à 10 mbars, ledit moule ne disposant d'aucun évent,
ii) remplissage dudit moule fermé ainsi sous vide par injection à l'état fondu sur ledit renfort à l'état sec d'une quantité pré-dosée, juste nécessaire pour obtenir la pièce finale, d'un système réactif bicomposant (également citée comme composition réactive bicomposante) qui est le précurseur dudit polymère thermoplastique (matrice), à base de prépolymère thermoplastique réactif, de préférence de prépolymère polyamide réactif, le moule pouvant être maintenu en isotherme à une température inférieure à la température d'injection et avec ladite injection étant réalisée à l'aide d'un dispositif d'injection comprenant deux compartiments distincts pour chacun des deux composants réactifs à l'état fondu, lesdits composants réactifs étant mélangés avant injection dans la chambre d'une tête de mélangeur statique avec un temps de séjour dans ladite chambre inférieur à 2 minutes, de préférence inférieur à 1 minute et plus préférentiellement inférieur à 10 secondes, à une température pouvant aller de 180°C à 400°C, de préférence de 200°C à 300°C, avec imprégnation dudit renfort fibreux et réaction simultanée et consécutive à l'imprégnation dudit système réactif bicomposant sous une pression inférieure à 1 mbar, le fluage de la résine à travers le renfort étant accompagné d'une pression de compactage en fin d'injection assurant un remplissage complet dudit moule, sans évent,
iii) démoulage de ladite pièce sans aucun traitement de finition.

Selon une option particulière, il comprend en plus, après l'étape ii), une étape de surmoulage par injection séparée sur la pièce formée et encore dans le moule de l'étape ii), d'un polymère thermoplastique à l'état fondu comprenant des fibres de renfort courtes ou longues de facteur de forme L/D inférieur à 1000, ledit polymère thermoplastique étant utilisé ici à l'état de granulés, avant sa fusion, et contenant déjà lesdites fibres de renfort, ledit thermoplastique étant compatible avec le polymère issu dudit système réactif bicomposant à base de prépolymère réactif.

Selon une version particulière dudit procédé, la pièce de l'étape ii), sans surmoulage ou avec surmoulage (la pièce surmoulée) comme définie ci-haut, peut faire partie, plus précisément être partie intégrante, d'une pièce complexe comportant d'autres parties constitutives liées entre elles et de nature différente et choisies parmi parties plastiques et/ou métalliques et ledit procédé fait partie (est une étape) d'un procédé de moulage par assemblage « in-mold » desdites pièces constitutives, dans le même moule ou un moule différent, pour former ladite pièce complexe finale.

Selon une variante du procédé de l'invention, ledit renfort fibreux peut être à l'état de préforme réalisée dans une étape préalable au moulage de la pièce composite par moulage-formage spécifique de ladite préforme et, en option, cette préforme pouvant être réalisée dans le même moule par compression-moulage dudit renfort préalablement imprégné par un liant polymère compatible avec le polymère issu dudit système réactif bicomposant à base de prépolymère ou par le même système réactif bicomposant ou ladite préforme pouvant être réalisée par thermoformage dans un moule différent.

De préférence, la viscosité dudit système réactif bicomposant tel qu'injecté à la sortie de la tête dudit mélangeur statique est inférieure à 50 Pa.s et de préférence inférieure à 5 Pa.s et plus préférentiellement inférieure à 1 Pa.s.

Concernant le système réactif bicomposant selon une première option, il comprend au moins un prépolymère thermoplastique réactif, de préférence prépolymère polyamide réactif, portant deux fonctions identiques (non réactives entre elles) et au moins un allongeur de chaîne non polymérique et portant deux fonctions identiques (non réactives entre elles) et réactives (seulement) avec celles dudit prépolymère réactif, et de préférence par polyaddition, ce qui signifie sans élimination de sous-produits de réaction.

Selon une deuxième option, ledit système réactif bicomposant comprend au moins un premier prépolymère réactif, de préférence prépolymère polyamide réactif, portant deux fonctions identiques (non réactives entre elles) et au moins un deuxième prépolymère réactif, de préférence prépolymère polyamide réactif, portant deux fonctions identiques (non réactives entre elles) et réactives (seulement) avec celles dudit premier prépolymère réactif, par polyaddition ou par polycondensation.

Selon une version préférée du procédé de l'invention, ledit polymère de ladite matrice thermoplastique est semi-cristallin et a une température de transition vitreuse Tg supérieure à 90°C, de préférence supérieure à 100°C, plus préférentiellement supérieure à 120°C et une température de fusion Tf inférieure à 320°C, de préférence Tf inférieure à 280°C, plus préférentiellement Tf étant entre 200 et 280°C, en particulier de structure semi-aromatique et/ou semi-cycloaliphatique, ce qui signifie comprenant une structure aromatique et/ou cycloaliphatique, de préférence étant un polyamide semi-cristallin. Dans ce cas, le prépolymère thermoplastique correspondant dans ladite composition réactive bicomposante (ou système réactif bicomposant) sera également semi-cristallin et de même structure, de préférence étant un prépolymère réactif polyamide semi-cristallin.

La masse moléculaire moyenne en nombre Mn dudit polymère thermoplastique final de la matrice thermoplastique dudit matériau composite est de préférence dans une plage allant de 10000 à 40000, de préférence de 12000 à 30000. Sa structure est issue de la composition réactive bicomposante (système réactif bicomposant) qui est le précurseur du polymère thermoplastique de ladite matrice thermoplastique. La masse Mn du prépolymère réactif correspondant utilisé est d'au moins deux fois inférieure à celle dudit polymère final de matrice thermoplastique.

La masse moléculaire moyenne en nombre Mn des prépolymères réactifs thermoplastiques, de préférence prépolymères polyamides, faisant partie dudit système réactif bicomposant (ou composition réactive bicomposante) précurseur dudit polymère thermoplastique de la matrice, peut varier de 500 à 10000, de préférence de 1000 à 6000.

Ladite valeur Mn est déterminée par calcul à partir de la titration (telle que potentiométrique) des fonctions terminales portées par ledit prépolymère et de la fonctionnalité dudit prépolymère déterminée à partir du bilan matière et de la fonctionnalité des réactants impliqués dans la préparation dudit prépolymère réactif.

Ledit système réactif bicomposant (ou la composition réactive bicomposante noté ici p)) et précurseur dudit polymère thermoplastique de ladite matrice peut être définie selon deux options, p1) en étant à base de deux prépolymères thermoplastiques réactifs bifonctionnels p11) et p12) respectivement, de préférence semi-cristallins et plus particulièrement prépolymères réactifs polyamides, avec p11) portant 2 fonctions réactives X' identiques et avec p12) portant 2 fonctions Y' également identiques et avec les deux fonctions X' et Y' étant réactives entre elles.

Selon une deuxième option et préférée, ladite composition précurseur est définie selon p2) à base d'un prépolymère réactif bifonctionnel thermoplastique p21), de préférence semi-cristallin, en particulier prépolymère réactif polyamide, portant 2 fonctions réactives X identiques et d'un allongeur de chaîne non polymérique p22), de préférence ayant une masse moléculaire inférieure à 500 et en particulier inférieure à 400, avec p22) portant 2 fonctions Y réactives identiques, avec ladite fonction X dudit prépolymère p21) étant réactive avec ladite fonction Y dudit allongeur p22).

Les fonctions préférées portées par les prépolymères réactifs dudit système réactif bicomposant p) tels que définis selon p11), p12) ou p21) sont sélectionnées parmi : amine (représentée par NH₂, qui représente à la fois amine primaire et secondaire), carboxy (représentée par CO₂H) ou hydroxy (représentée par OH), plus préférentiellement amine et carboxy.

Ladite fonction Y dudit allongeur p22) peut être sélectionnée comme suit en fonction de la fonction X dudit prépolymère p21) :
- pour X étant carboxy, Y est choisi parmi : oxazoline, oxazine, imidazoline, aziridine ou époxy
- pour X étant amine, Y est choisi parmi : maléimide, époxy, isocyanate bloqué, oxazinone, oxazolinone, caprolactame ou anhydride carboxylique et, dans ce dernier cas, en particulier ledit allongeur peut être choisi parmi les anhydrides cycliques aromatiques et/ou cycloaliphatiques.

Des exemples d'allongeurs p22) convenables pour l'invention sont cités ci-dessous. La partie de l'allongeur p22) portant les deux fonctions (ou groupements) Y pourrait être représentée par un biradical -A'-, avec ledit allongeur ayant une formule globale Y-A'-Y.

Plus particulièrement, quand ledit allongeur Y-A'-Y correspond à une fonction Y choisie parmi oxazinone, oxazolinone, oxazine, oxazoline ou imidazoline, dans ce cas, dans l'allongeur de chaîne représenté par Y-A'-Y, A' peut représenter un alkylène tel que -(CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques, et de préférence A' peut être un arylène et/ou un cycloalkylène. Ceci reste valable quand Y est époxy.

Dans le cas du carbonyl- ou téréphtaloyl- ou isophtaloyl- biscaprolactame comme allongeur de chaîne Y-A'-Y, les conditions préférées évitent l'élimination de sous-produit, comme le caprolactame lors de ladite polymérisation et moulage à l'état fondu.

Dans le cas où Y est une fonction d'isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère p21) porteur de X = amine, les conditions préférées évitent toute formation de cycle imide lors de la polymérisation et moulage (ou mise en oeuvre) à l'état fondu.

Pour X = amine, le groupement Y est choisi de préférence parmi : isocyanate bloqué, oxazinone et oxazolinone ou époxy, plus préférentiellement oxazinone et oxazolinone, avec comme radical A' étant comme défini ci-haut.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme A' pouvant être une simple liaison covalente avec pour allongeurs correspondants respectifs étant : bis-(benzoxazinone), bisoxazinone et bisoxazolinone.

A' peut être également un alkylène en C₁ à C₁₄, de préférence en C₂ à C₁₀ mais de préférence A' est un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y choisies parmi oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type la 1,1' isophtaloyl-bis(2-méthyl aziridine).

La présence d'un catalyseur de la réaction entre ledit prépolymère p21) et ledit allongeur p22) à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, l'acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalénylènes). De préférence, A' représente un arylène qui peut être benzénique ou naphténique substitué ou non.

Les prépolymères réactifs, tels que définis ci-haut selon p11), p12) ou p21), peuvent être de structure amorphe ou semi-cristalline, les structures semi-cristallines étant préférées. Concernant la structure chimique de ces prépolymères (et par conséquent des polymères de la matrice thermoplastique), ces prépolymères peuvent être sélectionnés, par exemple, parmi les prépolymères réactifs à base de : homopolymères ou copolymères de polyamides, y compris copolymères polyamides-éthers, polyamides-esters, polyesters, polyuréthanes, polyurées, polyaryl éthers, polyaryléthercétones (PAEK), polyétheréther cétones (PEEK), polyéthercétone cétones (PEKK), polyéthercétoneéthercétone cétones (PEKEKK), polyimides.

Les prépolymères réactifs thermoplastiques tels que définis selon p11), p12) ou p21) sont par définition bifonctionnels, ce qui conduit après réaction d'allongement de chaîne à un polymère linéaire par définition (thermoplastique).

Ces prépolymères peuvent être préparés par des voies classiques telles que la polycondensation ou polyaddition limitée (contrôlée) pour former des oligomères ou prépolymères à partir de monomères réactifs bifonctionnels, porteurs desdites fonctions X' ou Y' ou X comme définies ci-haut ou d'autres fonctions réactives initiales et post-modifiées en X', Y' ou X comme définies ci-haut pour respectivement prépolymères p11), p12) et p21).

Plus particulièrement, dans le cas préféré de prépolymères réactifs polyamides, ceux-ci peuvent être obtenus, par exemple, par polycondensation entre une diamine et un diacide avec excès de l'un des deux monomères qui impose sa fonctionnalité terminale, comme la masse moléculaire. Des aminoacides ou lactames peuvent être présents en plus des deux monomères diamine et diacide. Dans le cas d'une composition réactive bicomposante type p1), ledit prépolymère p11) peut porter deux fonctions X' identiques, amine ou carboxy et le deuxième prépolymère polyamide p12) portera deux fonctions Y' réactives seulement avec les fonctions X'. Dans le cas d'une composition p2), le choix de la fonction Y et de l'allongeur p22) correspondant, par rapport aux fonctions X du prépolymère polyamide p21), a déjà été décrit ci-haut.

Concernant le renfort fibreux dudit matériau composite thermoplastique, il est de préférence à base de fibres de renfort longues ayant un facteur de forme L/D (longueur sur diamètre) bien supérieur à 1000 et de préférence supérieur à 2000.

Les fibres peuvent être continues et présentes sous forme d'assemblage qui peut être une préforme. Elles peuvent se présenter sous forme de renfort unidirectionnel (UD) ou multidirectionnel (2D, 3D). En particulier, elles peuvent être sous forme de tissus, d'étoffes, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures aux températures de mise en oeuvre,
- les fibres polymériques ou de polymère, ayant une température de fusion Tf' ou à défaut de Tf', une température de transition vitreuse Tg', bien supérieure aux températures de mise en oeuvre
- ou les mélanges des fibres citées ci-haut.

Plus particulièrement, ces fibres de renfort peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   ▪ les fibres de polymères thermoplastiques et plus particulièrement choisies parmi : le polyéthylène téréphtalate (PET), le polybutylène téréphtalate (PBT),
   ▪ les fibres de polyamides répondant à l'une des formules : 6, 11, 12, 6.10, 6.12, 6.6,4.6,
   ▪ les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
   ▪ les fibres de copolymères blocs de polyamide tels que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues choisies parmi les : fibres de carbone y compris métallisées, fibres de verre y compris métallisées de type E, R, S2, fibres d'aramides (comme le Kevlar®) ou de polyamides aromatiques, les fibres de polyaryléthers cétones (PAEK) telles que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar®) ou leurs mélanges.

Lesdites fibres peuvent représenter des taux de 40% à 70% en volume et de préférence de 50% à 65% en volume dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 200 à 700g/m².

Les fibres les plus préférées sont sélectionnées parmi les fibres de verre, de carbone, de céramique et d'aramide ou leurs mélanges.

En plus desdites fibres de renfort, la composition dudit composite thermoplastique du procédé selon l'invention peut comprendre d'autres charges et additifs.

Parmi les charges convenables, on peut citer par exemple : les charges minérales ou organiques, comme le noir de carbone, nanotubes de carbone (NTC), nanofibrilles de carbone, billes ou poudre de verre, polymères recyclés broyés à l'état de poudre.

Parmi les additifs convenables, on peut citer : des additifs absorbant dans l'UV ou IR de façon à permettre le soudage du composite obtenu par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du composite obtenu.

Plus particulièrement, dans le cas de fabrication d'une pièce surmoulée comme décrit ci-haut, ledit polymère thermoplastique de surmoulage est semi-cristallin et de température de fusion supérieure à 200°C et, de préférence, polyamide semi-cristallin. Comme décrit ci-haut, ledit polymère de surmoulage est compatible avec le polymère thermoplastique matrice du composite thermoplastique.

Le deuxième objet de l'invention est un dispositif de fabrication qui peut être un ensemble d'appareils ou machines associés ou une unité ou atelier de fabrication permettant la mise en oeuvre du procédé tel que défini ci-haut selon l'invention, lequel dispositif comprend :
a) au moins un dispositif d'injection à l'état fondu permettant l'injection, dans une plage de température allant de 180°C à 400°C et, de préférence de 200°C à 350°C, plus préférentiellement de 200°C à 300°C, d'un système réactif bicomposant (également appelé composition réactive bicomposante), lequel dispositif comprend deux compartiments d'alimentation séparés, munis chacun d'un système de chauffage et de régulation de température (dans lesdites plages citées ci-haut) et d'une pompe d'alimentation alimentant chacune la chambre d'une tête d'un mélangeur statique également disposant d'un système de chauffage et de régulation, ladite tête de mélangeur alimentant en au moins un point d'injection, un dispositif de moulage b) comme défini ci-dessous
b) un dispositif de moulage par compression sous vide comprenant un moule composé de deux parties, l'une fixe et l'autre mobile, séparées entre elles par un joint d'étanchéité compressible, ledit joint étant de préférence à base de élastomère fluoré ou de joint métallique élastique formant ainsi une cavité de moulage étanche (cavité étanche), dispositif muni d'un système de chauffage et de régulation en isotherme à une température inférieure à la température d'injection et d'un système de mise sous vide, ladite cavité étanche non compactée (ou non compressée) permettant un fluage de la matière injectée et le compactage (ou compression) généré à la fermeture du moule sous vide, assurant à la fois le remplissage complet de ladite cavité mais également le fluage transverse de la matière par rapport au renfort, tout cela dans ladite cavité à une pression inférieure à 1 mbar, ledit moule ayant une fermeture étanche sous vide et ne comportant aucun évent et étant alimenté directement par ledit dispositif d'injection a) à travers une alimentation au niveau de la sortie de la tête dudit mélangeur statique.

Ledit dispositif d'injection a) avec les deux compartiments distincts peut être une machine adaptée d'injection réactive bicomposante, telle qu'une machine de type RIM avec adaptation des paramètres à un système réactif bicomposant à base de prépolymères thermoplastiques ayant une viscosité à l'état fondu convenable qui est inférieure à 50 Pa.s.

Le mélangeur statique est de préférence un mélangeur permettant un mélange rapide et efficace (intime) de deux composants réactifs sans permettre de réaction in situ avec un temps de séjour dans la chambre de la tête dudit mélangeur de l'ordre de quelques dizaines de secondes et de préférence inférieur à 10 secondes.

Ce dispositif de fabrication peut comprendre au moins un deuxième dispositif d'injection pour un système monocomposant pour permettre un surmoulage par un thermoplastique à l'état fondu chargé de fibres courtes ou longues de facteur de forme inférieur à 1000, ce deuxième dispositif d'injection étant directement connecté au même dispositif de moulage b), en particulier par au moins un deuxième point d'injection dans ledit dispositif de moulage b), en particulier ledit moule, ledit thermoplastique pouvant être alimenté dans ledit dispositif d'injection sous forme de granulés chargés desdites fibres, optionnellement par les moyens d'une trémie d'alimentation. Ce deuxième dispositif d'injection peut être une machine d'injection monocomposante ou une extrudeuse.

Un autre objet de la présente invention concerne une pièce composite structurale ou semi-structurale susceptible d'être obtenue par le procédé de l'invention tel que décrit ci-haut ou en utilisant le dispositif de l'invention comme décrit ci-dessus, en particulier pièce ne comportant aucune carotte résiduelle de moulage et pouvant être utilisée après démoulage sans aucun traitement de finition. Plus particulièrement, ladite pièce est « net-shape » selon ce terme en anglais et courant dans le métier du moulage, ce qui signifie ne nécessitant aucun usinage ou finition particulière avant utilisation finale. Ceci est lié aux conditions spécifiques de fabrication et en particulier de moulage dans un moule fonctionnant sous vide et de ce fait sans aucun besoin d'évent qui d'habitude (quand il est présent) nécessite, au démoulage, l'élimination de la carotte formée liée à cet évent par un usinage et une finition supplémentaire. Ceci est une différence importante de structure finale et un avantage supplémentaire significatif par rapport à l'état de la technique dans ce domaine. Plus particulièrement, ladite pièce a une matrice polymère thermoplastique, de préférence polyamide, résultant d'une composition réactive bicomposante comprenant comme premier composant réactif A1) : au moins un prépolymère thermoplastique réactif, de préférence prépolymère polyamide réactif, en particulier semi-cristallin, portant deux fonctions identiques (non réactives entre elles) et comme deuxième composant réactif A2) selon une première option de A2) : au moins un allongeur de chaîne non polymérique et portant deux fonctions identiques (non réactives entre elles) et réactives avec celles dudit prépolymère réactif, de préférence par polyaddition ou comme seconde option de A2), au moins un deuxième prépolymère réactif, de préférence prépolymère polyamide réactif, en particulier semi-cristallin, portant deux fonctions identiques (non réactives entre elles) et réactives avec celles dudit premier prépolymère réactif A1), par polyaddition ou par polycondensation, en particulier A2) étant défini selon la première option de A2).

Selon une option particulièrement préférée, ledit prépolymère réactif A1) est un polyamide, de préférence semi-aromatique et/ou semi-cycloaliphatique, en particulier semi-cristallin et porte deux fonctions identiques (non réactives entre elles).

Ladite pièce de l'invention, qui peut être structurale ou semi-structurale, peut être utilisée pour diverses applications finales, en particulier dans les domaines de l'automobile, du transport routier comme pièces pour camions, ferroviaire, maritime et aéronautique, photovoltaïque, solaire (thermique) en particulier composants de centrales solaires, de l'éolien, spatial, bâtiment et génie civil, mobilier et équipements urbains, signalisation, des sports et loisirs.

Plus particulièrement, ladite pièce est une pièce d'automobile choisie parmi ou pour une caisse en blanc, un tablier, hayon arrière, plancher, face latérale, pavillon, barre de ressort, caisson « crash box » avant, arrière, latérale, structure portière, pare-chocs et plus particulièrement ladite pièce est apte à être soumise à la cataphorèse.

Donc, la présente invention couvre en particulier des pièces structurales ou semi-structurales pour l'automobile et susceptibles d'être obtenues par le procédé de fabrication ou par utilisation du dispositif de fabrication selon l'invention et comme décrits ci-haut et ayant l'aptitude à être soumises à la cataphorèse.

Selon une option particulière et préférée, la pièce structurale ou semi-structurale de l'invention fait partie intégrante d'une pièce complexe obtenue par assemblage « in-mold » à base d'un système réactif bicomposant, à base de prépolymères réactifs thermoplastiques, en particulier de polyamide, comme prépolymère réactif.

Selon une option préférée, ladite pièce composite structurale ou semi-structurale est à base d'une matrice thermoplastique qui est un polyamide et ledit système réactif bicomposant, dont est issue ladite matrice thermoplastique, comprend au moins un prépolymère polyamide réactif, de préférence semi-aromatique et/ou semi-cycloaliphatique, en particulier semi-cristallin, portant deux fonctions identiques (non réactives entre elles) et au moins un allongeur de chaîne non polymérique et portant deux fonctions identiques (non réactives entre elles) pouvant réagir avec celles dudit polyamide réactif.

Selon une variante particulière, ladite pièce est surmoulée et comprend donc un polymère thermoplastique chargé de fibres courtes ou longues de facteur de forme L/D inférieur à 1000, surmoulé sur ladite pièce à base dudit système réactif bicomposant, ledit polymère thermoplastique de surmoulage étant compatible avec ledit polymère issu du système réactif bicomposant à base de prépolymère réactif thermoplastique.

### Méthodes de détermination des caractéristiques citées

- La viscosité à l'état fondu du prépolymère ou de la composition précurseur est mesurée suivant le manuel de référence du constructeur de l'appareil de mesure utilisé qui est un rhéomètre Physica MCR301, sous balayage d'azote à la température donnée sous cisaillement de 100 s⁻¹, entre deux plans parallèles de diamètre de 50 mm.
- La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de seuls monomères bifonctionnels.
- La température de transition vitreuse Tg des polymères thermoplastiques utilisés est mesurée à l'aide d'un calorimètre différentiel à balayage (DSC), après un 2^{ème} passage en chauffe suivant la norme ISO 11357-2. La vitesse de chauffage et de refroidissement est de 20°C/min.
- La température de fusion Tf et la température de cristallisation Tc sont mesurées par DSC après une 1^{ère} chauffe, selon la norme ISO 11357-3. La vitesse de chauffage et de refroidissement est de 20°C/min.

## Revendications

1. Procédé de fabrication d'une pièce composite structurale ou semi-structurale pouvant être de forme complexe comprenant un renfort fibreux et une matrice polymère thermoplastique, de préférence à base de polyamide, **caractérisé en ce qu'**il comprend les étapes suivantes :
i) dépôt dudit renfort fibreux pouvant être à l'état de préforme dans un moule comportant deux parties, une partie fixe et une mobile, avec fermeture étanche dudit moule à l'aide d'un joint d'étanchéité compressible, par mise sous vide dudit moule à l'aide d'un dispositif de vide, la pression partielle dans le moule allant de 1 à 10 mbars, ledit moule ne disposant d'aucun évent,
ii) remplissage dudit moule fermé ainsi sous vide par injection à l'état fondu sur ledit renfort à l'état sec d'une quantité pré-dosée, juste nécessaire pour obtenir la pièce finale, d'un système réactif bicomposant, précurseur dudit polymère thermoplastique et à base de prépolymère thermoplastique réactif, de préférence de prépolymère polyamide réactif, le moule pouvant être maintenu en isotherme à une température inférieure à la température d'injection et avec ladite injection étant réalisée à l'aide d'un dispositif d'injection comprenant deux compartiments distincts pour chacun des deux composants réactifs à l'état fondu, lesdits composants réactifs étant mélangés avant injection, dans la chambre d'une tête de mélangeur statique avec un temps de séjour dans ladite chambre inférieur à 2 minutes, de préférence inférieur à 1 minute et plus préférentiellement inférieur à 10 secondes, à une température allant de 180°C à 400°C, de préférence de 200°C à 300°C, avec imprégnation dudit renfort fibreux et réaction simultanée et consécutive à l'imprégnation dudit système réactif bicomposant, sous une pression inférieure à 1 mbar, le fluage de la résine à travers le renfort étant accompagné d'une pression de compactage en fin d'injection assurant un remplissage complet dudit moule sans évent,
iii) démoulage de ladite pièce, sans aucun traitement de finition.

2. Procédé selon la revendication 1, **caractérisé en ce qu'**il comprend en plus, après l'étape ii), une étape de surmoulage par injection séparée sur la pièce formée et encore dans le moule de l'étape ii), d'un polymère thermoplastique à l'état fondu comprenant des fibres de renfort courtes ou longues de facteur de forme L/D inférieur à 1000, ledit polymère étant utilisé à l'état de granulés avant sa fusion, contenant déjà lesdites fibres de renfort, ledit thermoplastique étant compatible avec le polymère issu dudit système réactif bicomposant à base de prépolymère réactif.

3. Procédé selon la revendication 1 ou 2, **caractérisé en ce que** la pièce de l'étape ii), telle que définie selon la revendication 1 ou la pièce surmoulée telle que définie selon la revendication 2, fait partie d'une pièce complexe comportant d'autres parties constitutives liées entre elles et de nature différente et choisies parmi parties plastiques et/ou métalliques et que ledit procédé fait partie ou constitue une étape d'un procédé de moulage par assemblage « in-mold » desdites pièces constitutives dans le même moule ou dans un moule différent pour former ladite pièce complexe finale.

4. Procédé selon l'une des revendications 1 à 3, **caractérisé en ce que** ledit renfort fibreux est à l'état de préforme, réalisée dans une étape préalable au moulage de la pièce composite par moulage-formage spécifique de ladite préforme, avec en option cette préforme étant réalisée dans le même moule par compression-moulage dudit renfort préalablement imprégné par un liant polymère compatible avec le polymère issu dudit système réactif bicomposant à base de prépolymère ou par le même système réactif bicomposant ou ladite préforme étant réalisée par thermoformage dans un moule différent.

5. Procédé selon l'une des revendications 1 à 4, **caractérisé en ce que** la viscosité dudit système réactif bicomposant tel qu'injecté à la sortie de la tête dudit mélangeur statique est inférieure à 50 Pa.s, de préférence inférieure à 5 Pa.s, plus préférentiellement inférieure à 1 Pa.s.

6. Procédé selon l'une des revendications 1 à 5, **caractérisé en ce que** ledit système réactif bicomposant comprend au moins un prépolymère thermoplastique réactif, de préférence prépolymère polyamide réactif, portant deux fonctions identiques et au moins un allongeur de chaîne non polymérique et portant deux fonctions identiques et réactives avec celles dudit prépolymère réactif, de préférence par polyaddition.

7. Procédé selon l'une des revendications 1 à 5, **caractérisé en ce que** ledit système réactif bicomposant comprend au moins un premier prépolymère réactif, de préférence prépolymère polyamide réactif, portant deux fonctions identiques et au moins un deuxième prépolymère réactif, de préférence prépolymère polyamide réactif, portant deux fonctions identiques et réactives avec celles dudit premier prépolymère réactif par polyaddition ou par polycondensation.

8. Procédé selon l'une des revendications 1 à 7, **caractérisé en ce que** ledit polymère de ladite matrice thermoplastique est semi-cristallin ayant une température de transition vitreuse Tg supérieure à 90°C, de préférence supérieure à 100°C, plus préférentiellement supérieure à 120°C et une température de fusion Tf inférieure à 320°C, de préférence inférieure à 280°C, plus préférentiellement entre 200 et 280°C, en particulier de structure semi-aromatique et/ou semi-cycloaliphatique, de préférence un polyamide semi-cristallin.

9. Procédé selon l'une des revendications 2 à 8, **caractérisé en ce que** ledit polymère thermoplastique de surmoulage est semi-cristallin et de température de fusion supérieure à 200°C, de préférence polyamide semi-cristallin.

10. Dispositif de fabrication pour la mise en oeuvre du procédé tel que défini selon l'une des revendications 1 à 9, **caractérisé en ce qu'**il comprend :
a) au moins un dispositif d'injection à l'état fondu permettant l'injection dans une plage de température allant de 180 à 400°C et de préférence de 200 à 350°C, plus préférentiellement de 200 à 300°C, d'un système réactif bicomposant qui comprend deux compartiments d'alimentation séparés, munis chacun d'un système de chauffage et de régulation de température dans lesdites plages citées ci-dessus et d'une pompe d'alimentation alimentant chacune la chambre d'une tête de mélangeur statique, disposant également d'un système de chauffage et de régulation, ladite tête de mélangeur alimentant en au moins un point d'injection un dispositif de moulage b) comme défini ci-dessous,
b) un dispositif de moulage b) par compression sous vide comprenant un moule composé de deux parties, l'une fixe et l'autre mobile, séparées par un joint d'étanchéité compressible, ledit joint étant de préférence à base d'élastomère fluoré ou joint métallique élastique, formant ainsi une cavité étanche de moulage, dispositif muni d'un système de chauffage et de régulation en isotherme à une température inférieure à la température d'injection et d'un système de mise sous vide, ladite cavité étanche non compactée permettant un fluage de la matière injectée et le compactage généré à la fermeture du moule sous vide, assurant à la fois le remplissage complet de ladite cavité mais également le fluage transverse de la matière par rapport au renfort, tout cela dans ladite cavité à une pression inférieure à 1 mbar, ledit moule ayant une fermeture étanche sous vide et ne comportant aucun évent et étant alimenté directement par ledit dispositif d'injection a) à travers une alimentation au niveau de la sortie de la tête dudit mélangeur statique.

11. Dispositif selon la revendication 10, **caractérisé en ce qu'**il comprend au moins un deuxième dispositif d'injection pour un système monocomposant, permettant un surmoulage par un thermoplastique à l'état fondu chargé de fibres courtes ou longues de facteur de forme inférieur à 1000, ce deuxième dispositif d'injection étant directement connecté au même dispositif de moulage b), en particulier par au moins un deuxième point d'injection dans ledit dispositif de moulage b), en particulier ledit moule, ledit thermoplastique pouvant être alimenté dans ledit dispositif d'injection sous forme de granulés chargés desdites fibres, optionnellement par les moyens d'une trémie d'alimentation, ledit deuxième dispositif d'injection pouvant être une machine d'injection monocomposante ou une extrudeuse.

12. Pièce composite structurale ou semi-structurale obtenue par un procédé tel que défini selon l'une des revendications 1 à 9, laquelle pièce composite ne comporte aucune carotte résiduelle de moulage et peut être utilisée après démoulage sans aucun traitement de finition et laquelle pièce composite a une matrice polymère thermoplastique résultant d'une composition réactive bicomposante comprenant comme premier composant réactif A1) : au moins un prépolymère thermoplastique réactif, portant deux fonctions identiques non réactives entre elles et comme deuxième composant réactif A2) selon une première option de A2) : au moins un allongeur de chaîne non polymérique et portant deux fonctions identiques non réactives entre elles et réactives avec celles dudit prépolymère réactif ou comme seconde option de A2), au moins un deuxième prépolymère réactif, portant deux fonctions identiques non réactives entre elles et réactives avec celles dudit premier prépolymère réactif A1), par polyaddition ou par polycondensation.

13. Pièce selon la revendication 12, **caractérisée en ce qu'**elle est une pièce pour application dans le domaine de l'automobile, du transport routier comme pièces pour camions, ferroviaire, maritime et aéronautique, de l'éolien, photovoltaïque, solaire (thermique), spatial, bâtiment, génie civil, mobilier et équipements urbains, signalisation, des sports et des loisirs.

14. Pièce selon l'une des revendications 13, **caractérisée en ce qu'**elle est une pièce d'automobile choisie parmi ou pour une caisse en blanc, un tablier, hayon arrière, plancher, face latérale, pavillon, barre de ressort, caisson « crash box » avant, arrière, latérale, structure portière, pare-chocs.

15. Pièce selon la revendication 13 ou 14, **caractérisée en ce qu'**elle est obtenue par un procédé tel que défini selon la revendication 8 ou 9 et qu'elle est une pièce automobile apte à être soumise à la cataphorèse.

16. Pièce selon l'une des revendications 12 à 15, **caractérisée en ce qu'**elle fait partie intégrante d'une pièce complexe obtenue par assemblage « in-mold », en particulier ladite pièce étant partie intégrante d'une pièce complexe et étant issue d'un système réactif bicomposant à base de prépolymères thermoplastiques réactifs, en particulier polyamide, de préférence semi-cristallin.

17. Pièce selon l'une des revendications 12 à 16, **caractérisée en ce que** ledit premier composant réactif A1) est un prépolymère polyamide réactif semi-cristallin et que ledit deuxième composant réactif A2), selon ladite seconde option de A2), est un deuxième prépolymère réactif qui est un polyamide réactif semi-cristallin.

18. Pièce selon l'une des revendications 12 à 16, **caractérisée en ce que** ladite matrice thermoplastique est un polyamide et que ledit système réactif bicomposant, dont est issue ladite matrice thermoplastique, comprend au moins un prépolymère polyamide réactif, semi-aromatique et/ou semi-cycloaliphatique, en particulier semi-cristallin, portant deux fonctions identiques et au moins un allongeur de chaîne non polymérique et portant deux fonctions identiques pouvant réagir avec celles dudit polyamide réactif.

19. Pièce selon la revendication 17 ou 18, **caractérisée en ce qu'**elle comprend un polymère thermoplastique chargé de fibres courtes ou longues de facteur de forme L/D inférieur à 1000, surmoulé sur ladite pièce à base dudit système réactif bicomposant.

## Patentansprüche

1. Verfahren zur Herstellung eines Struktur- oder Halbstruktur-Verbundteils, das komplexe Form haben kann, umfassend eine Faserverstärkung und eine thermoplastische Polymermatrix, vorzugsweise auf Basis von Polyamid, **dadurch gekennzeichnet, dass** es die folgenden Schritte umfasst:
i) Aufbringen der Faserverstärkung, die im Vorformzustand sein kann, in eine Form, umfassend zwei Teile, einen festen und einen beweglichen Teil, mit dichtem Verschluss der Form mit Hilfe einer komprimierbaren Dichtung durch Vakuumieren der Form mit Hilfe einer Vakuumvorrichtung, wobei der Teildruck in der Form von 1 bis 10 mbar geht, wobei die Form über keine Entlüftungsöffnung verfügt,
ii) Füllen der so unter Vakuum geschlossenen Form durch Einspritzen auf die Verstärkung einer vordosierten Menge im geschmolzenen Zustand, die gerade ausreicht, um das fertige Teil zu erhalten, eines reaktiven Zweikomponentensystems, das Vorläufer des thermoplastischen Polymers ist und auf Basis eines reaktiven thermoplastischen Präpolymers, vorzugsweise eines reaktiven Polyamid-Präpolymers, ist, wobei die Form isotherm auf einer Temperatur unter der Einspritztemperatur gehalten werden kann, und wobei das Einspritzen mit Hilfe einer Einspritzvorrichtung erfolgt, umfassend zwei getrennte Abteile für jede der zwei reaktiven Komponenten im geschmolzenen Zustand, wobei die reaktiven Komponenten vor dem Einspritzen in der Kammer eines statischen Mischkopfs gemischt werden, mit einer Aufenthaltszeit in der Kammer von weniger als 2 Minuten, vorzugsweise von weniger als 1 Minute und besonders bevorzugt von weniger als 10 Sekunden, bei einer Temperatur von 180 °C bis 400 °C, vorzugsweise von 200 °C bis 300 °C, mit Imprägnieren der Faserverstärkung und gleichzeitiger und an das Imprägnieren anschließender Reaktion des reaktiven Zweikomponentensystems unter einem Druck von weniger als 1 mbar, wobei das Fließen des Harzes durch die Verstärkung von einem Verdichtungsdruck am Ende des Einspritzens begleitet ist, der ein vollständiges Füllen der Form ohne Entlüftungsöffnung gewährleistet,
iii) Entformen des Teils ohne Endbehandlung.

2. Verfahren nach Anspruch 1, **dadurch gekennzeichnet, dass** es ferner nach dem Schritt ii) einen Schritt des Aufformens durch getrenntes Einspritzen auf das geformte Teil und auch in die Form des Schrittes ii) eines thermoplastischen Polymers im geschmolzenen Zustand, umfassend kurze oder lange Verstärkungsfasern mit einem Formfaktor L/D unter 1000, umfasst, wobei das Polymer im Granulatzustand vor seinem Schmelzen, bereits umfassend die Verstärkungsfasern, verwendet wird, wobei das Thermoplast mit dem Polymer kompatibel ist, das aus dem reaktiven Zweikomponentensystem auf Basis eines reaktiven Präpolymers stammt.

3. Verfahren nach Anspruch 1 oder 2, **dadurch gekennzeichnet, dass** das Teil aus Schritt ii), wie in Anspruch 1 definiert, oder das aufgeformte Teil, wie in Anspruch 2 definiert, Teil eines komplexen Teils ist, umfassend weitere miteinander verbundene Bestandteile von unterschiedlicher Natur, die unter Kunststoff- und/oder Metallteilen ausgewählt sind, und dass das Verfahren Teil eines Schrittes eines Formungsverfahrens durch "in-mold"-Zusammenfügen der Bestandteile in derselben Form oder in einer anderen Form zum Formen des komplexen fertigen Teils ist oder einen solchen darstellt.

4. Verfahren nach einem der Ansprüche 1 bis 3, **dadurch gekennzeichnet, dass** die Faserverstärkung im Vorformzustand ist, hergestellt in einem Schritt vor dem Formen des Verbundteils durch spezifisches Gießen-Formen der Vorform, wobei als Option diese Vorform in derselben Form durch Kompression-Formen der Verstärkung hergestellt wird, die vorher mit einem Polymerbindemittel, das mit dem Polymer kompatibel ist, das aus dem reaktiven Zweikomponentensystem auf Basis eines Präpolymers stammt, oder mit demselben reaktiven Zweikomponentensystem imprägniert wurde, oder wobei die Vorform durch Thermoformen in einer anderen Form hergestellt wird.

5. Verfahren nach einem der Ansprüche 1 bis 4, **dadurch gekennzeichnet, dass** die Viskosität des reaktiven Zweikomponentensystems, wie am Ausgang des Kopfs des statischen Mischers eingespritzt, niedriger als 50 Pa.s, vorzugsweise niedriger als 5 Pa.s, besonders bevorzugt niedriger als 1 Pa.s ist.

6. Verfahren nach einem der Ansprüche 1 bis 5, **dadurch gekennzeichnet, dass** das reaktive Zweikomponentensystem mindestens ein reaktives thermoplastisches Präpolymer, vorzugsweise ein reaktives Polyamid-Präpolymer, das zwei identische Funktionen trägt, und mindestens einen nicht polymeren Kettenverlängerer umfasst, der zwei identische Funktionen trägt, die mit jenen des reaktiven Präpolymers reaktiv sind, vorzugsweise durch Polyaddition.

7. Verfahren nach einem der Ansprüche 1 bis 5, **dadurch gekennzeichnet, dass** das reaktive Zweikomponentensystem mindestens ein erstes reaktives Präpolymer, vorzugsweise ein reaktives Polyamid-Präpolymer, das zwei identische Funktionen trägt, und mindestens ein zweites reaktives Präpolymer, vorzugsweise ein reaktives Polyamid-Präpolymer, umfasst, das zwei identische Funktionen trägt, die mit jenen des ersten reaktiven Präpolymers durch Polyaddition oder durch Polykondensation reaktiv sind.

8. Verfahren nach einem der Ansprüche 1 bis 7, **dadurch gekennzeichnet, dass** das Polymer der thermoplastischen Matrix semikristallin ist, mit einer Glasübergangstemperatur Tg über 90 °C, vorzugsweise über 100 °C, besonders bevorzugt über 120 °C, und einer Schmelztemperatur Tf unter 320 °C, vorzugsweise unter 280 °C, besonders bevorzugt zwischen 200 und 280 °C, insbesondere mit halbaromatischer und/oder semizykloaliphatischer Struktur, vorzugsweise ein semikristallines Polymer.

9. Verfahren nach einem der Ansprüche 2 bis 8, **dadurch gekennzeichnet, dass** das thermoplastische Aufformungspolymer semikristallin mit einer Schmelztemperatur über 200 °C ist, vorzugsweise ein semikristallines Polyamid.

10. Herstellungsvorrichtung für den Einsatz des Verfahrens, wie nach einem der Ansprüche 1 bis 9 definiert, **dadurch gekennzeichnet, dass** sie umfasst:
a) mindestens eine Einspritzvorrichtung im geschmolzenen Zustand, die das Einspritzen in einem Temperaturbereich von 180 bis 400 °C und vorzugsweise von 200 bis 350 °C, besonders bevorzugt von 200 bis 300 °C, eines reaktiven Zweikomponentensystems ermöglicht, die zwei getrennte Versorgungsabteile umfasst, die jeweils mit einem Heiz- und Temperaturregelsystem in den oben genannten Bereichen und mit einer Versorgungspumpe versehen sind, die jeweils die Kammer eines statischen Mischerkopfs versorgt, die ebenfalls über ein Heiz- und Regelsystem verfügt, wobei der Mischerkopf an mindestens einem Einspritzpunkt eine Formungsvorrichtung b), wie unten definiert, versorgt,
b) eine Formungsvorrichtung b) durch Vakuumkompression, umfassend eine Form, die aus zwei Teilen, einem festen und einem beweglichen, besteht, die durch eine komprimierbare Dichtung getrennt sind, wobei die Dichtung vorzugsweise auf Basis eines fluorhaltigen Elastomers oder eine elastische Metalldichtung ist, die so einen dichten Formungshohlraum bildet, wobei die Vorrichtung mit einem isothermen Heiz- und Regelsystem auf eine Temperatur unter der Einspritztemperatur und einem Vakuumierungssystem versehen ist, wobei der nicht verdichtete dichte Hohlraum ein Fließen des eingespritzten Materials und die beim Schließen der Form unter Vakuum erzeugte Verdichtung ermöglicht, wodurch sowohl das vollständige Füllen des Hohlraums als auch das Fließen des Materials quer zur Verstärkung gewährleistet werden, all dies in dem Hohlraum bei einem Druck unter 1 mbar, wobei die Form vakuumdicht verschlossen ist und keine Entlüftungsöffnung hat und direkt von der Einspritzvorrichtung a) durch eine Versorgung im Bereich des Ausgangs des Kopfs des statischen Mischers versorgt wird.

11. Vorrichtung nach Anspruch 10, **dadurch gekennzeichnet, dass** sie mindestens eine zweite Einspritzvorrichtung für ein Einkomponentensystem umfasst, die ein Aufformen mit einem Thermoplast im geschmolzenen Zustand, das mit kurzen oder langen Fasern mit einem Formfaktor unter 1000 beaufschlagt ist, ermöglicht, wobei diese zweite Einspritzvorrichtung direkt an dieselbe Formungsvorrichtung b) angeschlossen ist, insbesondere durch mindestens einen zweiten Einspritzpunkt in die Formungsvorrichtung b), insbesondere die Form, wobei das Thermoplast in die Einspritzvorrichtung in Form von mit den Fasern beaufschlagtem Granulat, optional durch die Mittel eines Versorgungsfilters, eingeführt werden kann, wobei die zweite Einspritzvorrichtung eine Einkomponenten-Einspritzmaschine oder ein Extruder sein kann.

12. Struktur- oder Halbstruktur-Verbundteil, das durch ein Verfahren, wie nach einem der Ansprüche 1 bis 9 definiert, hergestellt wird, wobei das Verbundteil keinen Formungsrestanguss umfasst und nach dem Entformen ohne jegliche Endbehandlung verwendet werden kann, wobei das Verbundteil eine thermoplastische Polymermatrix hat, die aus einer reaktiven Zweikomponentenzusammensetzung stammt, umfassend als erste reaktive Komponente A1): mindestens ein reaktives thermoplastisches Präpolymer, das zwei identische, untereinander nicht reaktive Funktionen trägt, und als zweite reaktive Komponente A2) nach einer ersten Option von A2): mindestens einen nicht polymeren Kettenverlängerer, der zwei untereinander nicht reaktive identische Funktionen trägt, die mit jenen des reaktiven Präpolymers reaktiv sind, oder als zweite Option von A2): mindestens ein zweites reaktives Präpolymer, das zwei miteinander nicht reaktive identische Funktionen trägt, die mit jenen des ersten reaktiven Präpolymers A1) durch Polyaddition oder Polykondensation reaktiv sind.

13. Teil nach Anspruch 12, **dadurch gekennzeichnet, dass** es ein Teil zur Anwendung auf dem Gebiet des Automobilsektors, des Straßenverkehrs als Teile für LKWs, Eisenbahn-, Schifffahrts- und Luftfahrtsektors, der Windräder, Photovoltaiksysteme, Solarsysteme (Thermik), der Raumfahrt, des Bauwesens, des Tiefbaus, des Mobiliars und der städtischen Infrastruktur, der Beschilderung, des Sports und der Freizeit ist.

14. Teil nach einem der Ansprüche 13, **dadurch gekennzeichnet, dass** es ein Automobilteil ist, ausgewählt unter einer Rohkarosserie, einer Schürze, einer Heckklappe, einer Bodenplatte, einer Seitenfläche, einem Dachhimmel, einer Federschiene, einer vorderen, hinteren, seitlichen "Crashbox"-Kassette, Türstruktur, einem Stoßdämpfer.

15. Teil nach Anspruch 13 oder 14, **dadurch gekennzeichnet, dass** es durch ein Verfahren, wie nach Anspruch 8 oder 9 definiert, hergestellt ist, und dass es ein Automobilteil ist, das geeignet ist, der Tauchlackierung unterzogen zu werden.

16. Teil nach einem der Ansprüche 12 bis 15, **dadurch gekennzeichnet, dass** es Bestandteil eines komplexen Teils ist, das durch "in-mold"-Zusammenfügung hergestellt wurde, wobei das Teil insbesondere Bestandteil eines komplexen Teils ist, das aus einem reaktiven Zweikomponentensystem auf Basis von reaktiven thermoplastischen Präpolymeren, insbesondere semikristallinem Polyamid, stammt.

17. Teil nach einem der Ansprüche 12 bis 16, **dadurch gekennzeichnet, dass** die erste reaktive Komponente A1) ein semikristallines reaktives Polyamid-Präpolymer ist, und dass die zweite reaktive Komponente A2) nach der zweiten Option von A2) ein zweites reaktives Präpolymer ist, das ein semikristallines Polyamid ist.

18. Teil nach einem der Ansprüche 12 bis 16, **dadurch gekennzeichnet, dass** die thermoplastische Matrix ein Polyamid ist, und dass das reaktive Zweikomponentensystem, aus dem die thermoplastische Matrix stammt, mindestens ein reaktives, semiaromatisches und/oder semizykloaliphatisches, insbesondere semikristallines Polyamid-Präpolymer, das zwei identische Funktionen trägt, und mindestens einen nicht polymeren Kettenverlängerer umfasst, der zwei identische Funktionen trägt, die mit jenen des reaktiven Polyamids reagieren können.

19. Teil nach Anspruch 17 oder 18, **dadurch gekennzeichnet, dass** es ein thermoplastisches Polymer umfasst, das mit kurzen oder langen Fasern mit einem Formfaktor L/D unter 1000 beaufschlagt ist, das auf das Teil auf Basis des reaktiven Zweikomponentensystems aufgeformt ist.

## Claims

1. Process for manufacturing a structural or semi-structural composite part which may be in complex form, comprising a fibrous reinforcement and a thermoplastic polymer matrix, preferably based on polyamide, **characterized in that** it comprises the following steps:
i) depositing said fibrous reinforcement, which may be in the form of a preform, in a mould comprising two parts, one part being fixed and one mobile, with leaktight closure of said mould by means of a seal compressible by placing said mould under vacuum by means of a vacuum device, the partial pressure in the mould ranging from 1 to 10 mbar, said mould having no vent,
ii) filling said closed mould thus under vacuum by injecting, in the molten state, onto said reinforcement in the dry state a pre-metered amount, just necessary to obtain the final part, of a two-component reactive system, which is the precursor of said thermoplastic polymer, based on a reactive thermoplastic prepolymer, preferably on a reactive polyamide prepolymer, it being possible for the mould to be maintained under isothermal conditions at a temperature below the injection temperature and with said injection being carried out using an injection device comprising two distinct compartments for each of the two reactive components in the molten state, said reactive components being mixed before injection in the chamber of a static mixer head with a residence time in said chamber of less than 2 minutes, preferably less than 1 minute and more preferentially less than 10 seconds, at a temperature which can range from 180°C to 400°C, preferably from 200°C to 300°C, with impregnation of said fibrous reinforcement and simultaneous reaction following the impregnation of said two-component reactive system under a pressure of less than 1 mbar, the creep of the resin through the reinforcement being accompanied by a compacting pressure at the end of injection ensuring complete filling of said mould, with no vent,
iii) removing said part from the mould without any finishing treatment.

2. Process according to Claim 1, **characterized in that** it also comprises, after step ii), a step of overmoulding by separate injection onto the part formed and still in the mould of step ii), of a thermoplastic polymer in the molten state comprising short or long reinforcing fibres with an L/D aspect ratio of less than 1000, said polymer being used in the form of granules, before it is melted, and already containing said reinforcing fibres, said thermoplastic being compatible with the polymer resulting from said reactive prepolymer-based two-component reactive system.

3. Process according to Claim 1 or 2, **characterized in that** the part of step ii), as defined in Claim 1, or the overmoulded part as defined in Claim 2, is part of a complex part comprising other constituent parts which are attached to one another and are of different nature and which are chosen from plastic and/or metallic parts and that said process is part or constitutes a step of a process for moulding by "in-mould" assembly of said constituent parts in the same mould or in a different mould so as to form said final complex part.

4. Process according to one of Claims 1 to 3, **characterized in that** said fibrous reinforcement is in the form of a preform, produced in a step prior to the moulding of the composite part by specific moulding-forming of said preform, with this preform optionally being produced in the same mould by compression-moulding of said reinforcement pre-impregnated with a polymer binder compatible with the polymer resulting from said prepolymer-based two-component reactive system, or with the same two-component reactive system, or said preform being produced by thermoforming in a different mould.

5. Process according to one of Claims 1 to 4, **characterized in that** the viscosity of said two-component reactive system as injected at the outlet of the head of said static mixer is less than 50 Pa.s, preferably less than 5 Pa.s, more preferentially less than 1 Pa.s.

6. Process according to one of Claims 1 to 5, **characterized in that** said two-component reactive system comprises at least one reactive thermoplastic prepolymer, preferably reactive polyamide prepolymer, bearing two identical functions and at least one nonpolymeric chain extender bearing two identical functions reactive with those of said reactive prepolymer, preferably by polyaddition.

7. Process according to one of Claims 1 to 5, **characterized in that** said two-component reactive system comprises at least one first reactive prepolymer, preferably reactive polyamide prepolymer, bearing two identical functions and at least one second reactive prepolymer, preferably reactive polyamide prepolymer, bearing two identical functions reactive with those of said first reactive prepolymer by polyaddition or by polycondensation.

8. Process according to one of Claims 1 to 7, **characterized in that** said polymer of said thermoplastic matrix is semi-crystalline, having a glass transition temperature Tg above 90°C, preferably above 100°C, and more preferentially above 120°C, and a melting temperature Tm below 320°C, preferably below 280°C, more preferentially between 200 and 280°C, in particular of semi-aromatic and/or semi-cycloaliphatic structure, preferably a semi-crystalline polyamide.

9. Process according to one of Claims 2 to 8, **characterized in that** said overmoulding thermoplastic polymer is semi-crystalline and has a melting temperature above 200°C, preferably a semi-crystalline polyamide.

10. Manufacturing device for implementing the process as defined according to one of Claims 1 to 9, **characterized in that** it comprises:
a) at least one melt injection device allowing the injection, in a temperature range of from 180 to 400°C and preferably from 200 to 350°C, more preferentially from 200 to 300°C, of a two-component reactive system which comprises two separate feed compartments, each equipped with a heating and temperature-regulating system, said temperature being in said ranges mentioned above, and with a feed pump, each feeding the chamber of a head of a static mixer, also having a heating and regulating system, said mixer head feeding, at at least one injection point, a moulding device b) as defined below;
b) a vacuum compression-moulding device b) comprising a mould composed of two parts, one fixed and the other mobile, separated by a compressible seal, said seal preferably being based on a fluoroelastomer or elastic metallic seal, thus forming a leaktight moulding cavity, said device being equipped with a system for heating and regulating under isothermal conditions at a temperature below the injection temperature and with a system for placing under a vacuum, said noncompacted leaktight cavity allowing creep of the injected material, and the compacting generated on closing the mould under vacuum ensuring both complete filling of said cavity and also transverse creep of the material with respect to the reinforcement, all this in said cavity at a pressure below 1 mbar, said mould having a leaktight closure under vacuum and comprising no vent and being fed directly by said injection device a) through a feed at the level of the outlet of the head of said static mixer.

11. Device according to Claim 10, **characterized in that** it comprises at least one second injection device for a single-component system, in order to allow overmoulding with a thermoplastic in the molten state loaded with short or long fibres having an aspect ratio of less than 1000, this second injection device being directly connected to the same moulding device b), in particular via at least one second injection point in said moulding device b), in particular said mould, it being possible for said thermoplastic to be fed into said injection device in the form of granules loaded with said fibres, optionally by means of a feed hopper, it being possible for said second injection device to be a single-component injection machine or an extruder.

12. Structural or semi-structural composite part obtained by means of a process as defined according to one of Claims 1 to 9, which composite part comprises no residual moulding sprue and may be used after removal from the mould without any finishing treatment and which composite part has a thermoplastic polymer matrix resulting from a two-component reactive composition comprising, as first reactive component A1): at least one reactive thermoplastic prepolymer, bearing two identical functions not reactive with one another, and, as second reactive component A2) according to a first option for A2): at least one nonpolymeric chain extender bearing two identical functions not reactive with one another and reactive with those of said reactive prepolymer, or as second option for A2), at least one second reactive prepolymer, bearing two identical functions not reactive with one another and reactive with those of said first reactive prepolymer A1), by polyaddition or by polycondensation.

13. Part according to Claim 12, **characterized in that** it is a part for application in the following fields: the motor vehicle industry, road transport as parts for lorries, the railway industry, the maritime industry, aeronautics, wind power, photovoltaics, the solar (thermal) industry, the space industry, the construction industry, civil engineering, urban furniture and equipment, signage, sports and leisure.

14. Part according to either of Claims 13, **characterized in that** it is a motor vehicle part chosen from or for a body in white, an apron, tailgate, floor, side wall, roof, spring bar, front, back, side crash box, door structure and bumpers.

15. Part according to Claim 13 or 14, **characterized in that** it is obtained by means of a process as defined according to Claim 8 or 9 and that it is a motor vehicle part capable of being subjected to cataphoresis.

16. Part according to one of Claims 12 to 15, **characterized in that** it is an integral part of a complex part obtained by "in-mould" assembly, in particular said part being an integral part of a complex part and being the result of a two-component reactive system based on reactive thermoplastic prepolymers, in particular polyamide, which is preferably semi-crystalline.

17. Part according to one of Claims 12 to 16, **characterized in that** said first reactive component A1) is a semi-crystalline reactive polyamide prepolymer, and that said second reactive component A2), according to said second option for A2), is a second reactive prepolymer which is a semi-crystalline reactive polyamide.

18. Part according to one of Claims 12 to 16, **characterized in that** said thermoplastic matrix is a polyamide and that said two-component reactive system, from which said thermoplastic matrix is derived, comprises at least one reactive polyamide prepolymer, which is semi-aromatic and/or semi-cycloaliphatic, in particular semi-crystalline, bearing two identical functions and at least one nonpolymeric chain extender bearing two identical functions which can react with those of said reactive polyamide.

19. Part according to Claim 17 or 18, **characterized in that** it comprises a thermoplastic polymer loaded with short or long fibres having an L/D aspect ratio of less than 1000, overmoulded onto said part based on said two-component reactive system.
